# EUROPÄISCHE PATENTSCHRIFT

(11) **EP 0 414 829 B1**
(45) Veröffentlichungstag und Bekanntmachung des Hinweises auf die Patenterteilung: **25.05.1994**
(21) Anmeldenummer: 89911759.2
(22) Anmeldetag: 30.10.1989
(51) Int. Cl.: G01N 21/89, G07D 7/00

(54) **VORRICHTUNG ZUR GLEICHZEITIGEN BERÜHRUNGSLOSEN PRÜFUNG EINER MEHRZAHL VON STELLEN EINES PRÜFGUTS SOWIE DEREN VERWENDUNG**
A DEVICE FOR THE SIMULTANEOUS CONTACTLESS TESTING OF A PLURALITY OF POINTS ON A TEST SAMPLE AND ITS APPLICATION
DISPOSITIF POUR LE CONTROLE SIMULTANE, SANS CONTACT, DE PLUSIEURS ZONES SUR UN SPECIMEN ET UTILISATION DU DISPOSITIF

(30) Priorität: 31.10.1988 CH 4055/88; 31.10.1988 CH 4054/88
(43) Veröffentlichungstag der Anmeldung: 06.03.1991
(73) Patentinhaber: SCHOEPS, Wilfried, CH-5322 Koblenz (CH)
(72) Erfinder: SCHOEPS, Wilfried, CH-5322 Koblenz (CH)
(74) Vertreter: EGLI-EUROPEAN PATENT ATTORNEYS
(86) Internationale Anmeldenummer: CH8900187
(87) Internationale Veröffentlichungsnummer: WO9005297

(56) Entgegenhaltungen:
- EP-A- 0 182 647
- WO-A-87/03957

## Beschreibung

Die Erfindung betrifft eine Vorrichtung zur gleichzeitigen berührungslosen Prüfung einer Oberfläche oder internen Grenzfläche eines Prüfguts mittels Auflichts oder einer Schicht oder eines räumlichen Abschnitts des Prüfguts mittels zurückgestreuten oder zurückgespiegelten Durchlichts, wobei
- die Vorrichtung mindestens eine Lichtquelle und eine Mehrzahl von Prüfkanälen umfasst,
- jeder Prüfkanal einen optoelektronischen Wandler und mindestens einen im Lichtweg zwischen der Lichtquelle und dem Wandler angeordneten Lichtkanal umfasst, in dem ein Strahlenteilerelement angeordnet ist,
- jeder Lichtkanal als zur Begrenzung eines Lichtbündels bestimmtes optisches Element ausgebildet ist,
- die Lichtkanäle als ein Gehäuse durch dringende Ausnehmungen ausgebildet sind, und
- das Prüfgut im Lichtweg zwischen der Lichtquelle und dem Wandler angeordnet ist.

Ebenfalls betrifft die Erfindung eine Verwendung dieser Vorrichtung zur Prüfung einer vermeintlich glatten oder regelmässig strukturierten Oberfläche auf deren Unregelmässigkeiten, oder zur Prüfung einer lichtdurchlässigen, vermeintlich homogenen oder regelmässig strukturierten Schicht auf deren Unregelmässigkeiten bzw. Inhomogenitäten und Einschlüsse, oder zur Prüfung einer vermeintlich stillstehenden Oberfläche bzw. internen Grenzfläche des Prüfguts auf Lageänderungen dieser Fläche, oder zur Prüfung eines lichtdurchlässigen, vermeintlich stillstehenden räumlichen Abschnitts des Prüfguts auf Bewegungen und insbesondere auf Schwingungen von im Prüfgut vorliegenden Inhomogenitäten bzw. Einschlüssen wie im Prüfgut schwebende bzw. suspendierte Teilchen, oder zur Prüfung des Rundlaufs einer Welle auf Rundlauffehler, insbesondere Schwingungen.

Es handelt sich dabei um Verwendungen, die zum Teil die gleichen sind wie bei den Systemen zur Abtastung durch einen wandernden Laserlichtpunkt ("laser scanner inspection system" = LSIS). Solche LSIS erfordern ein mechanisch betriebenes Abtastsystem wie beispielsweise ein drehendes Spiegelpolygon sowie eine Lichtsammelvorrichtung wie beispielsweise einen Lichtleiter zum Leiten des Abtast-Lichtstrahls zu einem optoelektronischen Wandler. Deshalb sind sie teuer, sperrig und störanfällig, insbesondere wegen Verschleiss, da sie nicht statisch arbeiten. Ausserdem ermöglichen sie nicht, eine in Relativbewegung vorbeilaufende Fläche oder eine in Relativbewegung vorbeilaufende Oberfläche einer rotierenden Welle lückenlos zu prüfen: die Kombination vom Vorbeilauf des Prüfguts in Längsrichtung mit der Abtastung des Prüfguts in Querrichtung oder die Kombination der Rotation und Abtastung des Prüfguts ergibt auf dem Prüfgut eine im Zickzack geprüfte Fläche, was die Höchstgeschwindigkeit begrenzt, mit welcher es unter dem LSIS vorbeilaufen darf, wenn es auf seiner gesamten Fläche lückenlos zu prüfen ist, wie es insbesondere bei der Prüfung des Rundlaufs einer Welle notwendig ist. So sind einerseits gängige Textilbahnen von 4 m Breite bei heutzutage üblichen Vorbeilaufgeschwindigkeiten von 600 m/min, andererseits gängige Umfangsgeschwindigkeiten von schnelldrehenden Wellen in der Grössenordnung von 10 m/s, zu schnell, um mit LSIS lückenlos geprüft zu werden. Wenn ausserdem nicht nur der Rundlauf der Welle, sondern auch deren schnelle überlagerte Schwingungen zu prüfen sind, ist eine solche Prüfung mit LSIS überhaupt nicht möglich.

Aus WO-87/03957 ist ein elementares optoelektronisches Prüfgerät bekannt, das eine Lichtquelle und einen Prüfkanal mit einem optoelektronischen Wandler und einen im Lichtweg zwischen der Lichtquelle und dem Wandler angeordneten Lichtkanal umfasst. Das Prüfgut ist im Lichtweg zwischen der Lichtquelle und dem Wandler angeordnet. Der Lichtkanal hat eine Wandung, die einen Halbspiegel und den Wandler abstützt und daher zur Erreichung der nötigen Festigkeit eine gewisse Dicke aufweist. Auch benötigen die Halterungen des Halbspiegels und des Wandlers am Lichtkanal einen gewissen Platz.

Es ist zwar naheliegend zu versuchen, eine Vorrichtung der eingangs erwähnten Art aus solchen elementaren Prüfgeräten nach WO-87/03957 zusammenzubauen, indem man diese nebeneinander anordnet. Das ist jedoch nicht möglich, weil man die Prüfgeräte nach WO-87/03957 nicht dicht genug nebeneinander anordnen kann, um ein vorbeilaufendes Prüfgut (Relativbewegung, Schwingung, Drehung) lückenlos zu prüfen: ob die Anordnung der Prüfgeräte in einer oder in zwei zueinander versetzten Reihen erfolgt, stets werden die Wandungsdicke und Halterungen zuviel Platz beanspruchen, um die gewünschte Packungsdichte von Lichtkanälen und folglich von Prüfgeräten zu erlauben. Das gewünschte Resultat wäre nur mit mehr als zwei zueinander versetzten Reihen erreichbar, was aber einen entsprechend vermehrten Aufwand erfordern würde.

Ein Prüfgerät der gleichen Art ist noch aus FR-2491615 bekannt. Auf dem gleichen Prinzip funktionieren ausserdem Prüfgeräte, die beispielsweise aus DE-3428435, GB-2025041, US-3736065 oder LU-56099 bekannt sind. Keines der vorstehend genannten Dokumente gibt jedoch irgendeinen Hinweis auf die Lösung des vorstehend dargelegten Problems der Packungsdichte. Ein aus SU-666418 bekanntes Prüfgerät weist in einem Gehäuse eine Reihe von Fotodioden auf, die jedoch keinen Hinweis darauf zu geben vermag, wie man eine oder mehrere Reihen von elementaren Prüfgeräten mit hoher Packungsdichte im Gehäuse unterbringen kann.

Aufgabe der Erfindung ist es, eine Vorrichtung der eingangs erwähnten Art anzugeben, mit welcher man eine solche Packungsdichte von nebeneinander angeordneten Prüfgeräten erreicht, dass eine lückenlose Prüfung des Prüfguts erreichbar ist. Bei einem vorbeilaufenden Prüfgut (Relativbewegung, Schwingung, Drehung) soll die lückenlose Prüfung mit höchstens zwei Reihen von Prüfgeräten erreichbar sein. Zur lückenlosen Prüfung von stillstehendem flächigem Prüfgut oder einer vermeintlich stillstehenden Oberfläche bzw. internen Grenzfläche oder eines lichtdurchlässigen vermeintlich stillstehenden räumlichen Abschnitts des Prüfguts oder zur lückenlosen Prüfung des Rundlaufs einer Welle sollen mehrere Reihen von Prüfgeräten, gegebenenfalls gegeneinander versetzt, mit der erforderlichen Packungsdichte nebeneinander angeordnet werden können. Diese Aufgabe wird dadurch gelöst, dass die lichtkanäle auf zumindest einem Teil des darinliegenden Lichtwegs nebeneinander in dem gemeinsamen Gehäuse angeordnet sind, die Prüfkanäle in mindestens einer Reihe angeordnet sind, in jeder Reihe von Prüfkanälen die Lichtkanäle eine der betreffenden Reihe zugeordnete gemeinsame Symmetrieebene aufweisen, das Gehäuse mindestens zweiteilig mit in der jeweiligen Symmetrieebene voneinander trennbaren Teilen ausgebildet ist, die Strahlenteilerelemente aller Prüfkanäle als Teile eines eine einzelne Baugruppe bildenden, im Gehäuse entfernbar angeordneten Strahlenteilers ausgebildet sind, und die Wandler am gleichen Gehäuse wie der Strahlenteiler nebeneinander und je einem Lichtkanal entsprechend angeordnet sind.

Vorzugsweise können die prüfgutseitigen Enden der Lichtkanäle mit einer Fläche kongruent sein, die parallel zu einer Oberfläche des Prüfguts ausgebildet und angeordnet ist. Die Lichtquellen sind vorzugsweise aus je einem Lichtkanal entsprechenden Leuchtdioden oder Laserdioden gebildet, abseits des Gehäuses angeordnet und mit den Lichtkanälen über Lichtleiter verbunden. Die Wandler sind vorzugsweise aus je einem Lichtkanal entsprechenden Fotodioden gebildet, die abseits des Gehäuses angeordnet und mit den Lichtkanälen über Lichtleiter verbunden sind, die ihrerseits zumindest teilweise in zumindest einem Teil eines Lichtkanals angeordnet sein können. Die beiden Teile des Gehäuses sind vorzugsweise mit einander entsprechenden Ausnehmungen versehen, die bei Zusammenfügung der Teile zusammen eine Ausnehmung zur Aufnahme der einzelnen Baugruppe des Strahlenteilers bilden. In den Lichtkanälen können Polarisations- und/oder Farbfilterelemente angeordnet sein, die als Teile eines eine einzelne Baugruppe bildenden, im Gehäuse entfernbar angeordneten Polarisations- und/oder Farbfilters ausgebildet sind, und die beiden Teile des Gehäuses können dann mit einander entsprechenden Ausnehmungen versehen sein, die bei Zusammenfügung der Teile zusammen eine Ausnehmung zur Aufnahme der einzelnen Baugruppe des Filters bilden. Vorzugsweise können die Strahlenteilerelemente als Streifenspiegelelemente ausgebildet sein, und dann kann in jedem Lichtkanal ein zweites Streifenspiegelelement angeordnet sein, dessen Streifen halbdurchlässig sind und im wesentlichen den Streifen des als Streifenspiegelelement ausgebildeten Strahlenteilerelements entsprechen, wobei die Streifenspiegelelemente als Teile eines eine einzelne Baugruppe bildenden, im Gehäuse entfernbar angeordneten halbdurchlässigen Streifenspiegels ausgebildet sind. Vorzugsweise kann in jedem Lichtkanal ein zweites Strahlenteilerelement angeordnet sein, wobei die zweiten Strahlenteilerelemente als Teile eines eine einzelne Baugruppe bildenden, im Gehäuse entfernbar angeordneten zweiten Strahlenteilers ausgebildet sind, und je ein zweiten Wandler gegenüber dem zweiten Strahlenteilerelement wie der erste Wandler gegenüber dem ersten Strahlenteilerelement angeordnet sein.

Durch die erfindungsgemässe Anordnung der Lichtkanäle nebeneinander in einem gemeinsamen Gehäuse lässt sich die Packungsdichte der nebeneinander angeordneten Prüfgeräte derart steigern, dass eine lückenlose Prüfung des vorbeilaufenden (Relativbewegung, Schwingung, Drehung) mit höchstens zwei Reihen von Lichtkanälen erreichbar ist. Je nach der in den Lichtkanälen erreichten Kollimation kann eine lückenlose Prüfung des Prüfguts sogar mit einer einzigen Reihe von Lichtkanälen erreichbar sein. Als Folge davon ist die erfindungsgemässe Vorrichtung statisch, klein, robust und kostengünstig herstellbar. Dies erlaubt ihren Einsatz anstelle von LSIS.

Als Resultat eines Ersatzes von LSIS durch die erfindungsgemässe Vorrichtung kann bei lückenloser Prüfung des Prüfguts dessen Vorbeilaufgeschwindigkeit (Relativbewegung, Schwingung, Drehung) im Vergleich zum bisher Erreichbaren wesentlich gesteigert werden, denn die erreichbare Grenze der Vorbeilauf-, Schwingungs- bzw. Umfangsgeschwindigkeit des Prüfguts wird nur mehr von der optoelektronischen Signalverarbeitung bestimmt und die Vorbeilaufgeschwindigkeit kann beispielsweise 1000 m/min, die Schwingungs- oder Umlaufgeschwindigkeit beispielsweise mehr als 10 m/s betragen. Im Gegensatz zu LSIS ist die Länge der Reihe von Lichtkanälen in der erfindungsgemässen Vorrichtung unbeschränkt, so dass mit der erfindungsgemässen Vorrichtung auch die Dimension des vorbeilaufenden Prüfguts unbeschränkt ist und beispielsweise die Breite 10 m betragen kann. Auch bei einem solchen breiten und schnell vorbeilaufenden bzw. grossen und schnell schwingenden oder umlaufenden Prüfgut bleibt der vom Messprinzip her gegebene nominale Detektionsbereich von 10 bis 500 µm bei einer räumlichen Fehlerauflösung von 2,5 mm voll erreichbar, wobei Locher von 5 µm noch erfassbar sind.

Im Falle einer Ausbildung der erfindungsgemässen Vorrichtung mit einer Mehrzahl von Lichtquellen, die je einem Lichtkanal entsprechen und aus Leuchtdioden oder Laserdioden gebildet sind, erreicht man, dass bei Ausfall einer Lichtquelle nicht die gesamte Vorrichtung, sondern nur ein Kanal davon ausfällt, so dass während der Panne lediglich ein sehr geringer Bruchteil des Prüfguts ungeprüft bleibt.

Dank der kleinen Abmessungen der erfindungsgemässen Vorrichtung kann diese innerhalb von Gehäusen unter beschränkten räumlichen Verhältnissen untergebracht werden, beispielsweise in Vakuumglocken von Aufdampfsystemen, Aufsprühsystemen und dergleichen, was mit LSIS wegen der Abmessungen solcher Systeme nicht möglich ist.

Ebenfalls dank der kleinen Abmessungen der erfindungsgemässen Vorrichtung kann diese innerhalb von Rohren und Profilen untergebracht werden, was mit LSIS wegen der Abmessungen solcher Systeme nicht möglich ist.

Unter diesen Umständen und aufgrund dieser Vorteile ist die erfindungsgemässe Vorrichtung verwendbar zur Prüfung einer vermeintlich Stillstehenden Oberfläche oder internen Grenzfläche des Prüfguts auf Lageänderungen dieser Fläche, die beispielsweise durch Bewegung, Schwingung, Dehnung, Schrumpfung, Wachstum, Niederschlag und ähnliche Ursachen hervorgerufen sind, oder zur Prüfung des Rundlaufs einer Welle auf Rundlauffehler, insbesondere Schwingungen, gegebenenfalls in Abhängigkeit der Drehgeschwindigkeit der Welle, oder zur Prüfung einer lichtdurchlässigen, vermeintlich stillstehenden Schicht oder eines lichtdurchlässigen, vermeintlich stillstehenden räumlichen Abschnitts des Prüfguts auf Bewegungen und insbesondere Schwingungen von im Prüfgut vorliegenden Inhomogenitäten oder Einschlüssen wie im Prüfgut schwebende oder suspendierte Teilchen.

Beispiele solcher Verwendungen beziehen sich auf Platten ("compact disk") und Glasfabrikate wie Spiegel, Scheiben und Rohre, im Zustand des Halbfabrikats (Rohlinge) oder des Fertigfabrikats. So ist es aus Preisgründen bisher nicht zweckmässig gewesen, Platten sowohl vor wie auch nach der Beschichtung des Rohlings zu prüfen, man musste sich mit einer Prüfung nach der Beschichtung begnügen. Die erfindungsgemässe Vorrichtung erlaubt, beide Prüfungen durchzuführen und erst noch die Investitionen zu senken. Andere Beispiele beziehen sich auf Untersuchungen des Verhaltens von mechanischen Teilen wie Flugzeugflügel, oder des Fortschreitens von physikalischen Vorgängen wie Dehnung, Schrumpfung, Kondensation, Niederschlag, Verdampfung, Phasenwechsel oder Kristallisation, Polarisationswechsel von Bereichen, von langsamen chemischen Reaktionen wie Korrosion oder schnellen chemischen Reaktionen wie Explosion, von biologischen Vorgängen wie Wachstum von mikrobiologischen Kulturen, Pflanzen usw. oder noch auf Untersuchungen an stillstehenden oder fliessenden Gasen oder Flüssigkeiten, Emulsionen, Suspensionen usw. beispielsweise in bezug auf chemische Effekte wie Farb-, Polarisations oder Dichteänderungen, hydrodynamische oder akustische Effekte, Bildung von Dampfblasen, Fliessgeschwindigkeit, Gehalt an mitgeführten Teilchen oder Blasen usw.

Es ist hervorzuheben, dass Beschleunigungsmesser und Dehnungsmessstreifen der bisher üblichen Art Verbindungsdrähte erfordern, während die erfindungsgemässe Vorrichtung kontaktlos arbeitet.

In einer Variante der Verwendung kann man auf der einen Seite des Prüfguts eine Vorrichtung zur Prüfung mittels Auflichts oder zurückgestreuten Durchlichts verwenden und auf der anderen Seite des Prüfguts einen Rückstrahler für das durchgelassene Licht anordnen. In einer anderen Variante der Verwendung kann man auf der einen Seite des Prüfguts eine Vorrichtung zur Prüfung mittels Auflichts oder zurückgestreuten Durchlichts verwenden und auf der anderen Seite des Prüfguts einen Absorber für das durchgelassene Licht anordnen.

Somit kann die erfindungsgemässe Vorrichtung verschiedene Arten von Unregelmässigkeiten, Inhomogenitäten, Einschlüssen und Bewegungen auf verschiedene Weise prüfen und entsprechend differenzierte Ergebnisse liefern, aus denen man Rückschlüsse auf deren Ursachen ziehen kann.

Unter den Verwendungen der erfindungsgemässen Vorrichtung lassen sich über die bereits erwähnten Verwendungen hinaus beispielsweise noch zitieren: die Prüfung von unbeschichteten oder mit einer Metall oder Farbschicht beschichteten Polymerfolien und -filmen, von metallischen oder mit einer Metallschicht beschichteten Gegenständen wie Platten ("compact disk"), von unbeschichtetem, beschichtetem oder coloriertem Papier in Bahn oder Blattform, von unbeschichtetem oder mit einer Metall oder Farbschicht beschichtetem Flachglas, von unbeschichteten oder beschichteten Textilwaren auf Oberflächen bzw. Beschichtungsfehler wie Unregelmässigkeiten, Ablagerungen, Kratzer, Staubpartikel, Löcher, Hohlräume, Einschlüsse, farbliche oder optische Unterschiede, rauhe Stellen, Rillen usw., sowie auf strukturelle Abweichungen von Vernetzung bzw. Muster oder Druckqualität.

In einer hier als Beispiel angegebenen Ausbildung einer erfindungsgemässen Vorrichtung, die zur Prüfung von vorbeilaufenden Bahnen von 250 mm Breite bestimmt ist, sind in den beiden Gehäusen 96 Lichtkanäle von 2,54 x 2,54 mm Querschnitt in zwei versetzten Reihen zu je 48 Lichtkanälen angeordnet.

In einer anderen hier als Beispiel angegebenen Ausbildung einer erfindungsgemässen Vorrichtung, die zur Prüfung von Platten ("compact disk") von 130 mm Durchmesser im Rhythmus von höchstens 8 Sekunden pro Platte bestimmt ist, sind in einem oder zwei Gehäusen 32 Lichtkanäle von 2,54 x 2,54 mm Querschnitt in zwei versetzten Reihen zu je 16 Lichtkanälen angeordnet. In beiden Fällen können vollspiegelnde Oberfläche im Reflexionsmodus geprüft werden.

Zur Prüfung von teilspiegelnden Oberflächen von durchsichtigem Prüfgut kann man einen schwarzen Lichtabsorber darunterlegen. Zur Prüfung des Inneren von durchsichtigem oder lichtdurchlässigem Prüfgut kann man einen Spiegel darunterlegen, bei Benutzung eines Halbspiegels kann man die teilspiegelnden Oberflächen und das Innere gleichzeitig prüfen.

In einer hier als Beispiel angegebenen Ausbildung einer erfindungsgemässen Vorrichtung, die zur Prüfung des Rundlaufs einer Welle auf einer Länge von 250 mm bestimmt ist, sind in den beiden Gehäusen 96 Lichtkanäle von 2,54 x 2,54 mm Querschnitt in zwei versetzten Reihen zu je 48 Lichtkanälen angeordnet. Im Falle einer spiegelglatten Oberfläche kann im Reflexionsmodus geprüft werden.

In einer anderen hier als Beispiel angegebenen Ausbildung einer erfindungsgemässen Vorrichtung, die zur Prüfung durchsichtiger Flüssigkeit oder Gas in einer Leitung mit einem Schauglas von 100 mm Breite bestimmt ist, sind in einem oder zwei Gehäusen 40 Lichtkanäle von 2,54 x 2,54 mm Querschnitt in zwei versetzten Reihen zu je 20 Lichtkanälen angeordnet. Dazu kann man die Prüfung im Durchlichtmodus mit einem lichtquellenseitigen Gehäuse und einem zweiten wandlerseitigen Gehäuse oder einseitig im Auflichtmodus mit einem gegenüberliegenden Spiegel vornehmen.

Nachstehend werden Beispiele von Ausbildungen der erfindungsgemässen Vorrichtung unter Bezugnahme auf die Zeichnung näher beschrieben. Es zeigen:
- Fig. 1: eine schematische Seitenansicht einer Ausbildung einer erfindungsgemässen Vorrichtung mit einem lichtquellenseitigen zweiteiligen Gehäuse und einem zweiten zweiteiligen Gehäuse jeweils für 6 Lichtkanäle;
- Fig. 2: eine schematische Vorderansicht des in Fig. 1 links dargestellten Gehäuseteils des lichtquellenseitigen Gehäuses der Vorrichtung der Fig. 1;
- Fig. 3: eine schematische Rückansicht des lichtquellenseitigen Gehäuses der Vorrichtung der Fig. 1;
- Fig. 4: eine schematische Rückansicht des zweiten Gehäuses der Vorrichtung der Fig. 1;
- Fig. 5: eine schematische Untersicht des lichtquellenseitigen Gehäuses der Vorrichtung der Fig. 1;
- Fig. 6: eine schematische Draufsicht des zweiten Gehäuses der Vorrichtung der Fig. 1;
- Fig. 7: eine schematische Rückansicht des in Fig. 1 rechts dargestellten Gehäuseteils des lichtquellenseitigen Gehäuses der Vorrichtung der Fig. 1;
- Fig. 8: eine schematische Vorderansicht des in Fig. 1 rechts dargestellten Gehäuseteils des zweiten Gehäuses der Fig. 1;
- Fig. 9: eine schematische Darstellung der optisch wesentlichen Elemente einer erfindungsgemässen Vorrichtung in einer Anwendung zur Prüfung einer Oberfläche oder einer internen Grenzfläche des Prüfguts mittels Auflichts, oder einer Schicht oder eines räumlichen Abschnitts des Prüfguts mittels zurückgestreuten Durchlichts;
- Fig. 10: eine schematische Darstellung der optisch wesentlichen Elemente einer erfindungsgemässen Vorrichtung in einer Anwendung zur Prüfung einer Schicht oder eines räumlichen Abschnittes des Prüfguts mittels Durchlichts;
- Fig. 11: eine schematische Darstellung der optisch wesentlichen Elemente einer von der Vorrichtung der Fig. 1 abgeleiteten Vorrichtung zur Prüfung eines gekrümmten Prüfguts, wobei Lichtleiter und eine einzige Lichtquelle verwendet werden;
- Fig. 12: eine schematische Darstellung der optisch wesentlichen Elemente einer von der Vorrichtung der Fig. 1 abgeleiteten Vorrichtung zur Prüfung eines gekrümmten Prüfguts, wobei gewisse optische Elemente in das zweite Gehäuse versetzt worden sind; und
- Fig. 13: eine schematische Draufsicht des zweiten Gehäuses der Vorrichtung der Fig. 1 bei einer Ausbildung mit zwei gegeneinander versetzten Reihen von Prüfkanälen.

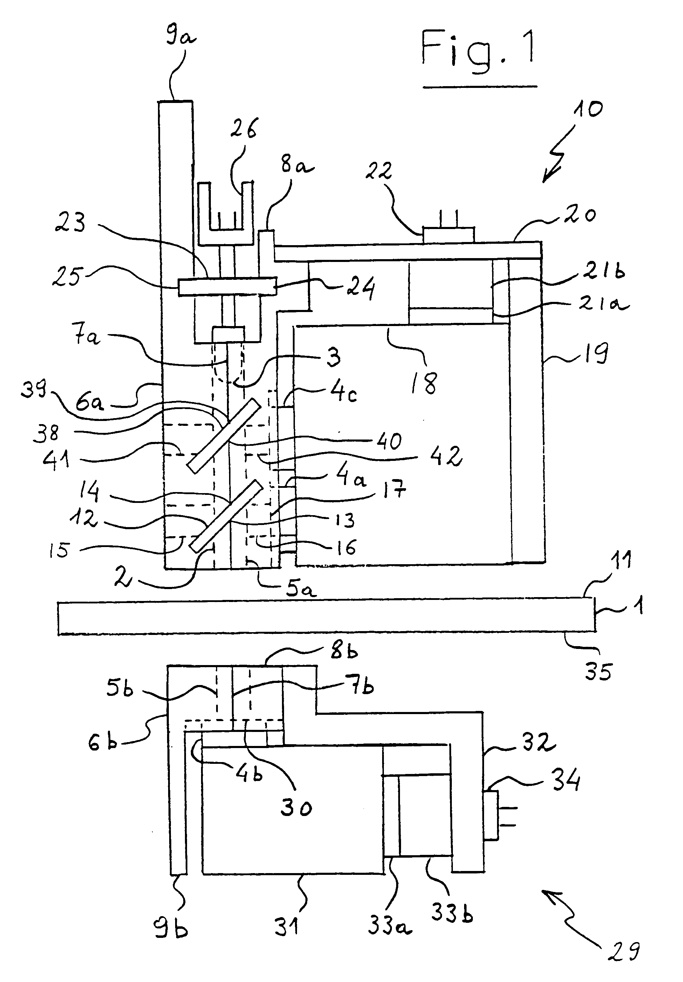

In Fig 1. ist ein Ausbildungsbeispiel einer erfindungsgemässen Vorrichtung in schematischer Seitenansicht dargestellt. Diese Vorrichtung ist zur gleichzeitigen berührungslosen Prüfung von Stellen einer Oberfläche oder eines räumlichen Abschnitts eines Prüfguts 1 bestimmt und funktioniert nach dem gleichen Prinzip wie die aus WO-87/03957 bekannte Vorrichtung. Daher braucht dieses Prinzip hier nicht beschrieben zu werden, es wird auf WO-87/03957 verwiesen.

Die Vorrichtung umfasst sechs Prüfkanäle 2, denen je eine Lichtquelle 3, welche als Leuchtdiode ausgebildet ist, und je drei optoelektronische Wandler 4a, 4b, 4c zugeordnet sind. In jedem Prüfkanal ist im Lichtweg zwischen der Lichtquelle 3 und den Wandlern 4a und 4c ein Lichtkanal 5a angeordnet. Im Lichtweg zwischen der Lichtquelle 3 und dem Wandler 4b ist ein zweiteiliger Lichtkanal 5a, 5b angeordnet. Das Prüfgut ist im Lichtweg zwischen der Lichtquelle 3 und dem jeweiligen Wandler 4a, 4b, 4c angeordnet. Streng genommen ist der Lichtkanal 5a zwischen der Lichtquelle 3 und dem Wandler 4a ebenfalls zweiteilig, da ihn das Licht von der Lichtquelle 3 zum Prüfgut 1 einmal und dann vom Prüfgut 1 zum Wandler 4b auf einem Teil seiner Länge noch einmal durchläuft.

Die Funktion des Lichtkanals 5a, 5b besteht darin, das Lichtbündel des von der Lichtquelle 3 zum Prüfgut 1 gelangenden Lichts zu begrenzen, d.h. die Divergenz zwischen einzelnen Lichtstrahlen des Lichtbündels kleiner als ein vorgegebener Winkelwert zu halten. In diesem Sinne ist der Lichtkanal 5a, 5b ein optisches Element.

In der dargestellten Ausbildung ist dieses optische Element als quaderförmiger Hohlraum ausgebildet, der in Gehäusen 6a, 6b vorgesehen ist, wobei in der dargestellten Ausbildung sechs dieser Hohlräume nebeneinander in je einem gemeinsamen ersten Gehäuse 6a bzw. zweiten Gehäuse 6b angeordnet sind.

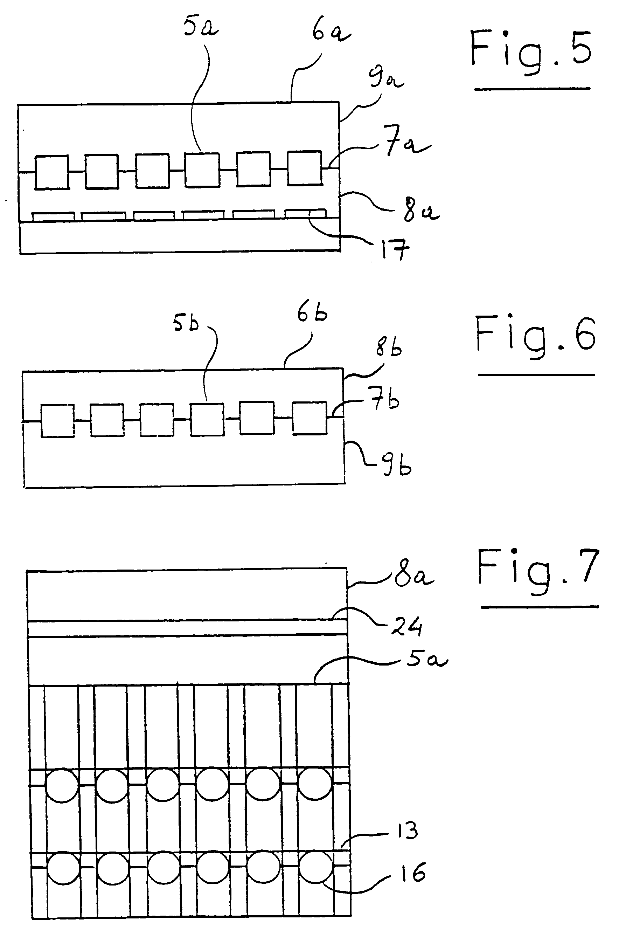

Die Gehäuse 6a, 6b können wie dargestellt zweiteilig ausgebildet sein, um die Fertigung der Lichtkanäle 5a, 5b z.B. durch Fräsen zu erleichtern. Diese Zweiteilung der Gehäuse ist auch in Fig. 5 und Fig. 6 sichtbar, wobei Fig. 5 eine schematische Untersicht des lichtquellenseitigen Gehäuses 6a und Fig. 6 eine schematische Draufsicht des zweiten Gehäuses 6b ist. In Fig. 1 und Fig. 5 sieht man die Trennebene 7a zwischen den beiden Gehäuseteilen 8a, 9a des Gehäuses 6a, in Fig. 1 und Fig. 6 sieht man die Trennebene 7b zwischen den beiden Gehäuseteilen 8b, 9b des Gehäuses 6b. Man erkennt in Fig. 5 und 6 die bereits erwähnte Ausbildung der Lichtkanäle 5a, 5b am viereckigen Querschnitt der quaderförmigen Hohlräume 5a, 5b, von denen sechs nebeneinander angeordnet sind, die einander gleich sind, so dass im folgenden bei der Beschreibung der Prüfkanäle (d.h. von all dem, was mit einem einzelnen Lichtkanal im Zusammenhang steht) nur jeweils einer davon beschrieben zu werden braucht. Die erwähnte Trennebene 7a bzw. 7b bildet mit Vorteil eine Symmetrieebene des jeweiligen Lichtkanals 5a, 5b.

In Fig. 1 ist oberhalb des Prüfguts 1 eine Ausbildung 10 der erfindungsgemässen Vorrichtung dargestellt, die zur Prüfung der oberen Oberfläche 11 des Prüfguts 1 mittels Auflichts oder der gesamten Schichtdicke oder der gesamten Dicke des räumlichen Abschnitts des Prüfguts 1 mittels zurückgestreuten Durchlichts dient. Der quaderförmige Hohlraum 5a durchdringt das Gehäuse 6a. An seinem einen Ende ist die Leuchtdiode 3 darin eingesteckt. An seinem anderen Ende endet er mit der in Fig. 5 sichtbaren Oeffnung 5a gegenüber der Oberfläche 11 des Prüfguts 1.

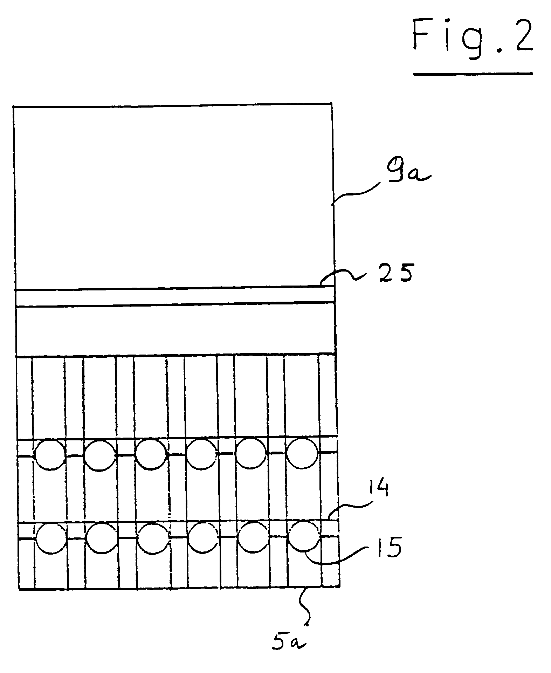

Ein als Halbspiegel ausgebildetes Strahlenteilerelement 12 ist im Winkel von 45 zur Längsachse des Hohlraums 5a darin angeordnet ist, um das vom Prüfgut 1 reflektierte oder zurückgestreute Licht zum optoelektronischen Wandler 4a umzulenken. Das Strahlenteilerelement 12 ist als halbverspiegelte Glasplatte ausgebildet, die sich einstückig, d.h. als eine einzelne Baugruppe, über die sechs Lichtkanäle 5a und die ganze Breite des Gehäuses 6a erstreckt. Diese Glasplatte 12 ist in einander entsprechenden Nuten 13 bzw. 14 des Gehäusesteils 8a bzw. 9a eingeschoben, wobei die Nuten 13 und 14 zusammen eine Ausnehmung zur Aufnahme der Glasplatte 12 bilden, wenn die Gehäuseteile 8a und 9a zusammengefügt sind. Die Nut 13 im Gehäuseteil 8a ist besonders in Fig. 7 sichtbar, sowie die im Gehäuseteil 8a liegende Hälfte des Hohlraums 5a. Die Nut 14 im Gehäuseteil 9a ist besonders in Fig. 2 sichtbar, sowie die im Gehäuseteil 9a liegende Hälfte des Hohlraums 5a.

Es ist ersichtlich, dass die erwähnte Zweiteilung des Gehäuses 6a in Teile 8a, 9a die Herstellung dieser Nuten 13 und 14 wesentlich erleichtert, und dass die Glasplatte 12 bei Bedarf durch Herausschieben aus den Nuten 13, 14 aus dem Gehäuse 6a entfernbar ist.

Im Gehäuseteil 9a ist für jeden Prüfkanal ein Lichtdurchlass 15 (Fig. 1 und 2) vorgesehen, der vom Hohlraum 5a nach aussen führt. Der Lichtdurchlass 15 erlaubt dem von der Glasplatte 12 umgelenkten Licht der Leuchtdiode 3, nach aussen zu verschwinden und nicht von der Wandung des Hohlraums 5a zur Glasplatte zurückgestreut zu werden. Beispielsweise kann das unerwünschte, von der Glasplatte 12 umgelenkte Licht der Leuchtdiode 3 durch den Lichtdurchlass 15 hindurch zu einem Lichtabsorber gelangen. Es wäre aber durchaus möglich, die Wandung des Hohlraums 5a derart lichtabsorbierend auszubilden, dass kein unerwünschtes, von der Glasplatte 12 umgelenktes Licht der Leuchtdiode 3 zur Glasplatte zurückkehrt und durch diese hindurch zur Fotodiode 4a gelangt.

Im Gehäuseteil 8a ist für jeden Prüfkanal ein Lichtdurchlass 16 (Fig. 1 und 7) vorgesehen, der vom Hohlraum 5a zum optoelektronischen Wandler 4a führt. Der Lichtdurchlass 16 erlaubt dem von der Glasplatte 12 umgelenkten, vom Prüfgut kommmenden Licht, zum optoelektronischen Wandler 4a zu gelangen. Der optoelektronische Wandler 4a ist eine etwa viereckige Fotodiode, deren lichtempfindliche Seite in einer im Gehäuseteil 8a dazu vorgesehenen Nut 17 (Fig. 1, 3 und 5) versenkt ist. Eine Leiterplatte 18 (Fig. 1) trägt die elektronische Schaltung für die Fotodiode 4a und ist über Trägerelemente 19 und 20 am Gehäuseteil 8a abgestützt, wobei die dazu verwendbaren Befestigungselemente wie Schrauben und Gewindebohrungen nicht dargestellt worden sind. Ueber eine Steckerverbindung 21a, 21b ist die Leiterplatte 18 elektrisch mit einem Steckeranschluss 22 verbunden, der eine Kabelverbindung aufnehmen kann. Ihrerseits ist die Leuchtdiode 3 auf einer Leiterplatte 23 angeordnet, die in Nuten 24 bzw. 25 der Gehäuseteile 8a bzw. 9a (Fig. 1, 2 und 7) darauf abgestützt ist. Die Leiterplatte 23 trägt auch einen Steckeranschluss 26, der eine Kabelverbindung aufnehmen kann.

Wie ersichtlich, sind einerseits die sechs Leuchtdioden 3, andererseits die sechs Fotodioden 4a nebeneinander am gleichen Gehäuse 6a wie der Strahlenteiler 12 angeordnet, wobei je eine Leuchtdiode 3 und je eine Fotodiode 4a je einem Lichtkanal 5a zugeordnet ist, während der Strahlenteiler 12 allen sechs Lichtkänalen 5a gemeinsam ist.

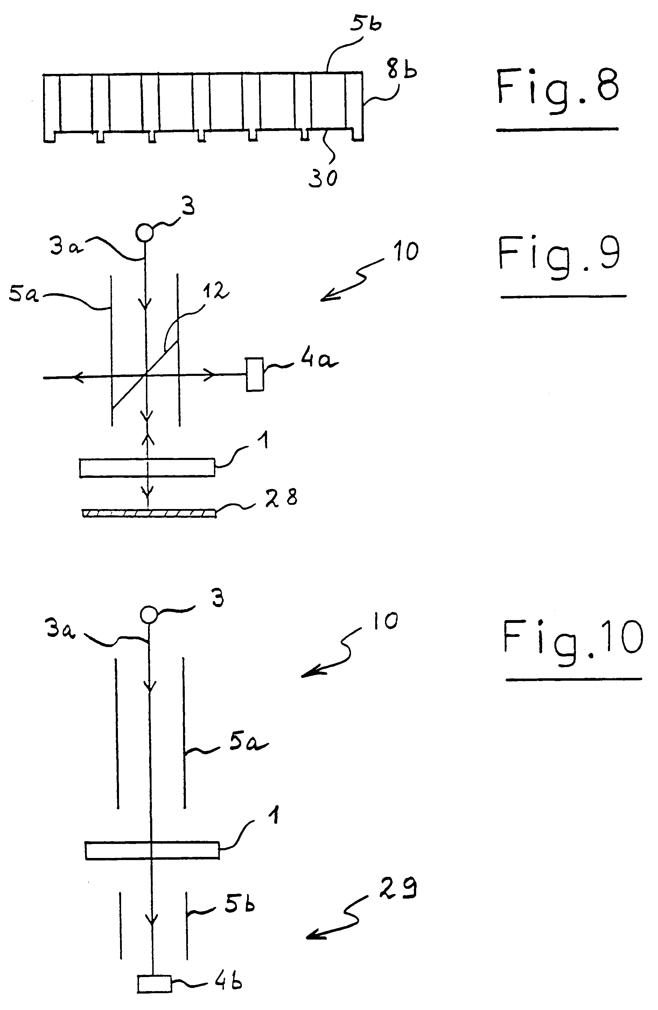

Zur Prüfung der oberen Oberfläche 11 des Prüfguts 1 mittels Auflichts ist die beschriebene Vorrichtung 10 direkt verwendbar. In jedem Prüfkanal erhält die Fotodiode 4a den vom Prüfgut 1 zurückgespiegelten oder zurückgestreuten Anteil des Lichts, das von der Leuchtdiode 3 über den Lichtkanal 5a zum Prüfgut 1 gelangt, das Prüfgut 1 ist somit im Lichtweg zwischen der Lichtquelle 3 und dem Wandler 4a angeordnet. Wenn das Prüfgut durchsichtig ist, kann man darunter (d.h. auf der anderen Seite des Prüfguts 1 als die Vorrichtung 10) ein optisches Element 28 anordnen, das zur Prüfung der gesamten Schichtdicke des Prüfguts 1 mittels zurückgestreuten Durchlichts ein Lichtabsorber oder zur Prüfung der gesamten Schicht oder der gesamten Dicke des räulichen Abschnitts des Prüfguts 1 mittels Durchlichts ein Spiegel sein kann. Die optisch wesentlichen Elemente dieser Anordnung sind in Fig. 9 schematisch dargestellt, wobei das optische Element 28 als Lichtabsorber dargestellt und der Lichtstrahl mit 3a bezeichnet worden ist.

In einer Variante dieser Ausbildung ist das Strahlenteilerelement 12 als Streifenspiegelement ausgebildet, um, wie aus WO-87/03957 bekannt ist, eine schlierenähnliche Wirkung hervorzurufen.

In Fig. 1 ist unterhalb des Prüfguts 1 derjenige Teil 29 der erfindungsgemässen Vorrichtung dargestellt, der mit der Prüfung einer Schicht oder eines räumlichen Abschnitts des Prüfguts 1 mittels Durchlichts im Zusammenhang steht. Der zweite Teil 5b des zweiteiligen Lichtkanals 5a, 5b ist nun als quaderförmiger Hohlraum 5b ausgebildet und durchdringt das zweite Gehäuse 6b.

Am einen Ende des quaderförmigen Hohlraums 5b ist ein zweiter optoelektronische Wandler 4b angeordnet, der wie der optoelektronische Wandler 4a eine etwa viereckige Fotodiode ist, deren lichtempfindliche Seite in einer in den beiden Gehäuseteilen 8b und 9b dazu vorgesehenen Nut 30 (Fig. 1, 4 und 8) versenkt ist. Eine Leiterplatte 31 (Fig. 1) trägt die elektronische Schaltung für die Fotodiode 4b und ist über ein Trägerelement 32 am Gehäuseteil 8b abgestützt, wobei die dazu verwendbaren Befestigungselemente wie Schrauben und Gewindebohrungen nicht dargestellt worden sind. Ueber eine Steckerverbindung 33a, 33b ist die Leiterplatte 31 elektrisch mit einem Steckeranschluss 34 verbunden, der eine Kabelverbindung aufnehmen kann.

An seinem anderen Ende endet der quaderförmige Hohlraum 5b mit der in Fig. 6 sichtbaren Oeffnung 5b gegenüber der unteren Oberfläche 35 des Prüfguts 1.

Die erfindungsgemässe Vorrichtung umfasst nun zwei Gehäuse 6a, 6b, wobei für jeden Lichtkanal die Leuchtdiode 3 im ersten Gehäuse 6a und die Fotodiode 4b im zweiten Gehäuse 6b nebeneinander und je einem Lichtkanal entsprechend angeordnet sind. In der in Fig. 1 dargestellten Ausbildung ist ein Teil 5b jedes Lichtkanals im zweiten Gehäuse 6b angeordnet.

In jedem Prüfkanal erhält die Fotodiode 4b den vom Prüfgut 1 durchgelassenen Anteil des Lichts, das von der Leuchtdiode 3 über den Lichtkanal 5a zum Prüfgut 1 und von dort weiter über den Lichtkanal 5b zur Fotodiode 4b gelangt, das Prüfgut 1 ist somit im Lichtweg zwischen der Lichtquelle 3 und dem Wandler 4b angeordnet. Die optisch wesentlichen Elemente dieser Anordnung sind in Fig. 10 schematisch dargestellt.

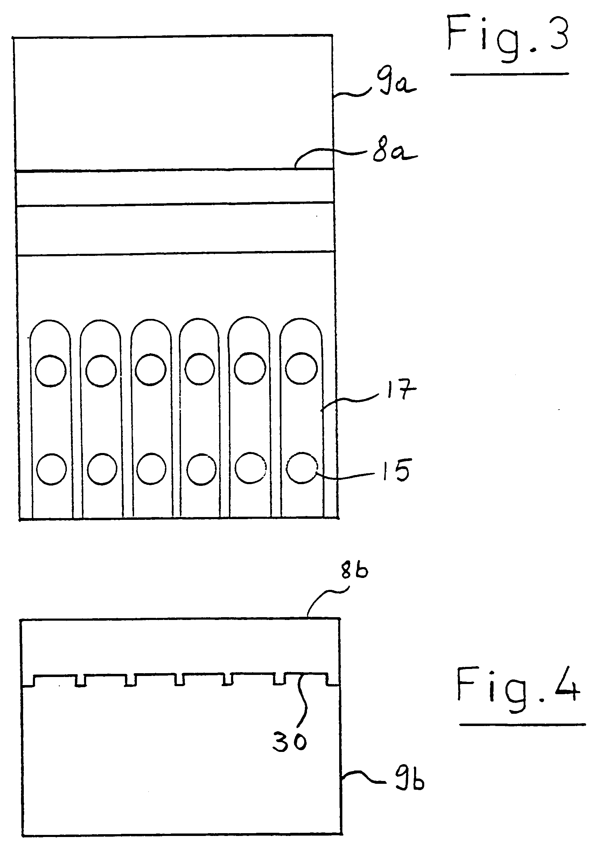

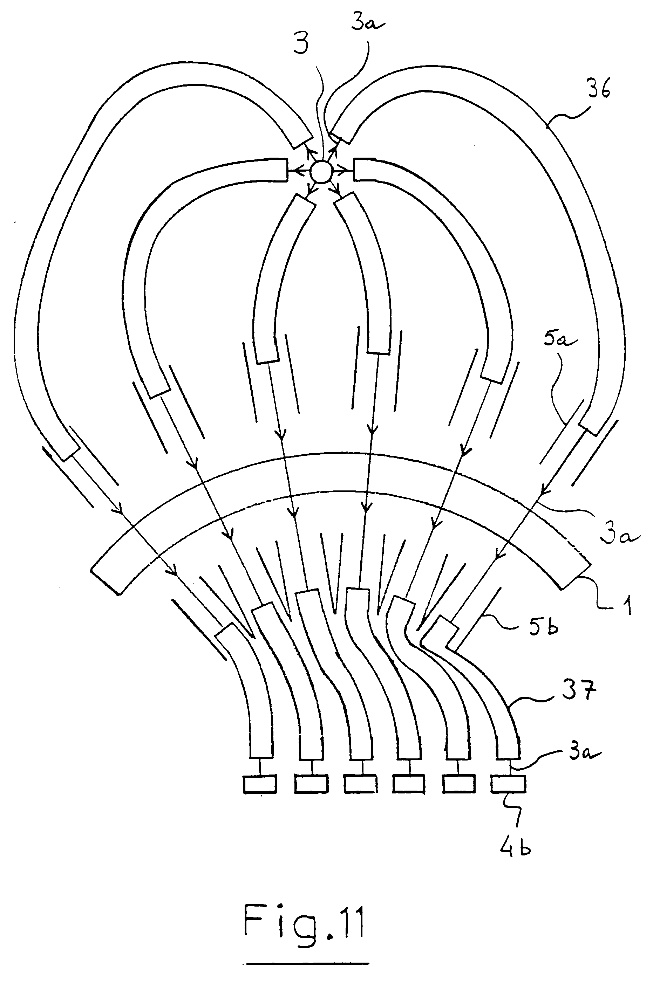

In der bisher beschriebenen Ausbildung ist das Prüfgut 1 im wesentlichen eben und die prüfgutseitigen Enden der Lichtkanäle 5a, 5b sind mit einer Ebene kongruent, die parallel zum Prüfgut 1 liegt. Wenn das Prüfgut eine vorbestimmte regelmässige Krümmung aufweist, beispielsweise wenn das Prüfgut als Glasrohr ausgebildet ist, kann die Vorrichtung der Form des Prüfgut angepasst werden, indem die prüfgutseitigen Enden der Lichtkanäle 5a, 5b mit einer Fläche kongruent sind, die parallel zur Oberfläche des Prüfguts ausgebildet und angeordnet ist. Im Falle eines zylindrisch oder sphärisch gekrümmten Prüfguts wären in den Fig. 2, 3 und 7 die untere horizontale Linie der Zeichnung und in den Fig. 4 und 8 die untere horizontale Linie der Zeichnung ein Kreisbogen statt einer Gerade. Im Falle einer anderen gekrümmten Form des Prüfguts wären die prüfgutseitigen Enden der Lichtkanäle 5a, 5b mit einer Fläche kongruent, die der Oberfläche des Prüfguts entsprechend angepasst wäre, um parallel dazu zu sein. Die optisch wesentlichen Elemente einer derartigen Ausbildung sind in Fig. 11, die weiter unten noch ausführlicher beschrieben wird, schematisch dargestellt.

Die Wandungen der Lichtkanäle 5a, 5b sind mit Vorteil geschwärzt, um das Lichtbündel des von der Lichtquelle 3 zum Prüfgut 1 gelangenden Lichts besser zu begrenzen, als wenn Reflexionen an den Wandungen der Hohlräume 5a, 5b erfolgen können. In einer Variante kann die Kombination von Lichtquelle 3 und Lichtkanälen 5a, 5b als Kollimator ausgebildet sein, denn ein Kollimator ist ja auch ein das Lichtbündel des von der Lichtquelle 3 zum Prüfgut 1 gelangenden Lichts begrenzendes optisches Element. Ausserdem können die Lichtquellen 3 als Laserdioden ausgebildet sein, dann ist die Ausbildung der Lichtkanäle 5a, 5b und insbesondere der Reflexionseigenschaften von deren Wandungen nicht so kritisch, da das Lichtbündel aus der Lichtdiode von sich aus bereits gut begrenzt ist und das Ganze weiterhin ein das Lichtbündel des von der Lichtquelle 3 zum Prüfgut 1 gelangenden Lichts begrenzendes optisches Element ist. In einer weiteren Variante können die Lichtkanäle als WinstonKollektor ausgebildet sein, und es sind noch weitere Varianten eines das Lichtbündel des von der Lichtquelle 3 zum Prüfgut 1 gelangenden Lichts begrenzenden optischen Elements denkbar.

In einer weiteren Variante des optischen Elements, welches das Lichtbündel des von der Lichtquelle 3 zum Prüfgut 1 gelangenden Lichts begrenzt, ist wie in Fig. 11 schematisch dargestellt die Lichtquelle 3 abseits des Gehäuses 6a angeordnet und mit dem Lichtkanal 5a über einen Lichtleiter 36 verbunden. Auch die Fotodioden 4b sind abseits des Gehäuses 6b angeordnet und mit dem Lichtkanal 5b über einen Lichtleiter 37 verbunden. Das gleiche gilt für die Fotodioden 4a im Gehäuse 6a, ist jedoch zur Vereinfachung der Zeichnung in Fig. 11 nicht eingezeichnet. Die Lichtleiter 36, 37 sind an ihrem der Lichtquelle 3 bzw. der Fotodiode 4a bzw. 4b abgewandten Ende auf einer gewissen Länge des Lichtleiters 36 bzw. 37 und des Lichtkanals 5a bzw. 5b im entsprechenden Lichtkanal eingesteckt. In diesem Sinne sind die Lichtleiter zumindest teilweise in zumindest einem Teil eines Lichtkanals angeordnet.

Ausserdem ist in Fig. 11 schematisch dargestellt, dass die erfindungsgemässe Vorrichtung auch mit einer einzigen, allen Prüfkanälen gemeinsamen Lichtquelle auskommen kann. Bei dieser Variante sind alle Lichtleiter 36 an ihrem lichtquellenseitigem Ende optisch an diese einzige Lichtquelle 3 angeschlossen, die natürlich alle Lichtleiter 36 anstrahlen muss und daher mit Vorteil eine Leuchtdiode ist.

Es ist zu verstehen, dass auch die Fotodioden 4a der Fig. 1 mit ihren zugeordneten Lichtdurchlässen 16 über Lichtleiter verbunden sein können, wie im unteren Teil der Fig. 11 in bezug auf die Fotodioden 4b und die Lichtkanäle 5b dargestellt worden ist. Das Prinzip ist ja dasselbe und dessen Anwendung auf naheliegende Weise von Fig. 11 ableitbar, so dass sich eine nährere Beschreibung erübrigt.

In Fig. 1 ist des weiteren sichtbar, dass im Lichtkanal 5a des oberhalb des Prüfguts 1 liegenden Teils 10 der erfindungsgemässen Vorrichtung ein weiteres optisches Element 38 angeordnet werden kann, das wie das optische Element 12 als Platte ausgebildet und im Gehäuse 6a mittels Nuten 39 und 40 ähnlich eingesetzt ist wie die Glasplatte 12 mittels der Nuten 13 und 14, wobei die Nuten 39 und 40 zusammen eine Ausnehmung zur Aufnahme der Platte 38 bilden, wenn die Gehäuseteile 8a und 9a zusammengefügt sind. Ebenfalls analog den Lichtdurchlässen 15 und 16 sind hier die Lichtdurchlässe 41 und 42 vorgesehen, wobei wiederum der Lichtdurchlass 41 ausfallen könnte, wenn die Wandung des Hohlraums 5a derart lichtabsorbierend ausgebildet ist, dass kein unerwünschtes, von der Platte 38 umgelenktes Licht der Leuchtdiode 3 zur Platte 38 zurückkehrt und durch diese hindurch zur Fotodiode 4a gelangt.

In einer Ausbildung des optischen Elements 38 ist dieser ein Polarisationsfilter oder ein Farbfilter. Wie im Falle des optischen Elements 12 bilden die den einzelnen Prüfkanälen zugeordneten Polarisationsfilter oder Farbfilter 38 zusammen eine einzelne Baugruppe, die im Gehäuse entfernbar angeordnet ist. Ein solcher Polarisationsfilter oder Farbfilter ermöglicht eine nach Polarisation oder Farbe differenzierte Erfassung der zu prüfenden Eigenschaften des Prüfguts. Dabei erlauben die Lichtdurchlässe 41 und 42 dem am Polarisationsfilter oder Farbfilter 38 reflektierten Licht, aus dem Lichtkanal 5a auszutreten und gegebenenfalls absorbiert zu werden, um eine Störung des Prüfvorgangs durch dieses Licht zu vermeiden. Da dies ähnlich geschieht wie am Lichtdurchlass 15 in bezug auf das optische Element 12, wird es zur Vereinfachung der Zeichnung nicht näher dargestellt. Auch hier kann der Lichtdurchlass 41 ausfallen, wenn die Wandung des Hohlraums 5a entsprechend lichtabsorbierend ausgebildet ist.

In einer anderen Ausbildung des optischen Elements 38 ist dieser ein zweiter Strahlenteiler, welcher wiederum als Teil eines eine einzelne Baugruppe bildenden, im Gehäuse 6a entfernbar angeordneten halbdurchlässigen Streifenspiegels ausgebildet ist.

In einer ersten Variante dieser Ausbildung ist die Fotodiode 4c am Gehäuse 6a und am Lichtdurchlass 42 ähnlich angeordnet wie die Fotodiode 4a am Gehäuse 6a und am Lichtdurchlass 16. Das vom Strahlenteiler 38 gespiegelte Licht erreicht die Fotodiode 4c wie im Falle der Fotodiode 4a das vom Strahlenteiler 12 gespiegelte Licht.

In einer zweiten Variante dieser Ausbildung ist die Fotodiode 4c am Gehäuse 6a, aber nun am Lichtdurchlass 41 ähnlich angeordnet wie die Fotodiode 4a am Gehäuse 6a und am Lichtdurchlass 16. Das vom Strahlenteiler 38 gespiegelte Licht erreicht die Fotodiode 4c, jedoch handelt es sich nun um einen Anteil des von der Lichtquelle 3 ausgehenden Lichts, so dass die Fotodiode 4c zur Messung und gegebenenfalls zur Regelung des von der Lichtquelle 3 ausgehenden Lichts dient.

Dieser zweiten Variante äquivalent ist es, die Fotodiode 4c wie in der ersten Variante am Lichtdurchlass 42 zu belassen und nun den Strahlenteiler 38 symmetrisch zur Trennebene 7a so zu versetzen, dass er einen Anteil des von der Lichtquelle 3 ausgehenden Lichts zur Fotodiode 4c umlenkt.

Diese verschiedenen Varianten einer an sich einheitlichen Ausbildung eignen sich vorwiegend zur Prüfung einer Oberfläche des Prüfguts mittels Auflichts oder einer Schicht oder eines räumlichen Abschnitts des Prüfguts mittels zurückgestreuten Durchlichts.

In einer noch anderen Ausbildung der optischen Elemente 12 und 38 sind beide Elemente 14 und 38 Strahlenteiler, die ausserdem als Streifenspiegelelemente ausgebildet sind, welche wiederum beide als Teile eines jeweils eine einzelne Baugruppe bildenden, im Gehäuse 6a entfernbar angeordneten halbdurchlässigen Streifenspiegels ausgebildet sind. In jedem Lichtkanal sind die Streifen der Streifenspiegelelemente halbdurchlässig und sie entsprechen einander im wesentlichen auf gleiche Weise, um, wie aus WO-87/03957 bekannt ist, eine schlierenähnliche Wirkung hervorzurufen.

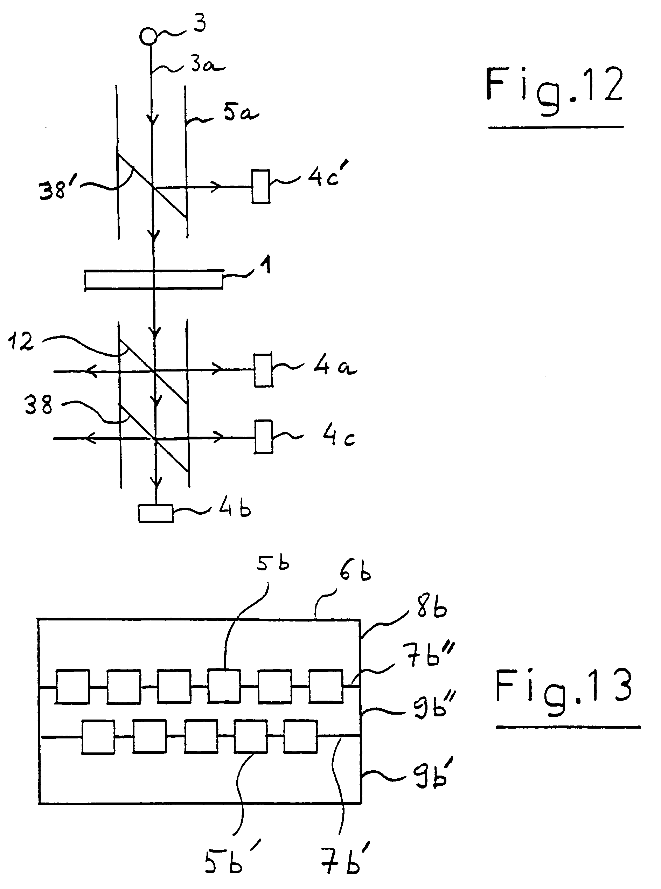

Generell ist es optisch äquivalent, die aus den Fotodioden 4a und gegebenenfalls 4c sowie aus den optischen Elementen 12 und gegebenenfalls 38 bestehende Konstruktion vom Gehäuse 6a zum Gehäuse 6b zu versetzen, und es ist nochmals das Gleiche, die Lichtquelle 3 am Gehäuse 6a mit der Fotodiode 4b am Gehäuse 6b zu vertauschen. Für diese Anordnung sind die optisch wesentlichen Elemente in Fig. 12 schematisch dargestellt, wobei am Gehäuse 6a ein zusätzlicher Strahlenteiler 38' und seine zugeordnete Fotodiode 4c' vorgesehen sind, um eine Messung und gegebenenfalls Regelung des von der Lichtquelle 3 ausgehenden Lichts zu ermöglichen.

Bei der vorangehend erfolgten Beschreibung der erfindungsgemässen Vorrichtung und bei der dazugehörigen Zeichnung ist, im Sinne einer Vereinfachung, stets eine Ausbildung mit nebeneinander in einer einzigen Reihe angeordneten Prüfkanälen als Beispiel gewählt worden. Die Wandungen zwischen den Lichtkanälen 5a bzw. 5b sind dabei nicht in Proportion der anderen Dimensionen gezeichnet worden, sondern zur besseren Veranschaulichtung wesentlich zu dick: da aber die Festigkeit der Vorrichtung dank dem Gehäuse nicht von diesen Wandungen abhängig ist, sind diese in Wirklichkeit gerade so dünn, dass sie nicht durchsichtig werden. So wird eine Packungsdichte von nebeneinander angeordneten Prüfkanälen erreicht, die eine lückenlose Prüfung des Prüfguts ermöglicht. Besser ist es aber, und bei stillstehendem flächigem Prüfgut sogar erforderlich zur Erreichung einer lückenlosen Prüfung des Prüfguts, zwei Reihen von Prüfkanälen oder mehr, gegeneinander versetzt, mit der erforderlichen Packungsdichte nebeneinander anzuordnen. Dies wird bei einer Ausbildung mit zwei gegeneinander versetzten Reihen von Prüfkanälen in Fig. 13 anhand des zweiten Gehäuses schematisch veranschaulicht. Fig. 13 ist von Fig. 6 abgeleitet. Die Elemente 5b, 6b, 7b und 8b der Fig. 13 sind die gleichen wie in Fig. 6. Das Aequivalent des Elements 9b der Fig. 6 ist nun in Fig. 13 zweiteilig ausgebildet, damit eine zweite Reihe von Lichtkanälen 5b' im Gehäuse angeordnet werden kann, und zwar parallel zur Reihe der Lichtkanäle 5b, jedoch gegenüber diesen versetzt, wie es Fig. 13 zeigt. Bis auf die Folgen dieser Versetzung ist der Gehäuseteil 9b' dem Gehäuseteil 9b der Fig. 6 äquivalent. Zwischen den Gehäuseteilen 8b und 9b' ist ein Gehäuseteil 9b'' angeordnet, dessen dem Gehäuseteil 8b zugewandter Teil in bezug auf letzteres die Rolle des Gehäuseteils 9b der Fig. 6 spielt, während dessen dem Gehäuseteil 9b' zugewandter Teil in bezug auf letzteres die Rolle des Gehäuseteils 8b der Fig. 6 spielt, so dass die Trennebene 7b der Fig. 6 durch zwei Trennebenen 7b' und 7b'' der Fig. 13 ersetzt wird.

Die Ausbildung der erfindungsgemässen Vorrichtung bleibt bei einer Anordnung von mehreren Reihen von Prüfkanälen bzw. Lichtkanälen 5b und 5b', wie beispielsweise in Fig. 13 dargestellt, im wesentlichen die gleiche wie im vorangehenden beschrieben, d.h. die nötigen Anpassungen sind dem Fachmann naheliegend und es ist nicht nötig, hier darauf einzugehen. Der Klarheit halber sei erwähnt, dass es gegebenenfalls keine Lichtdurchlässe analog den Lichtdurchlässen 15 und 41 gibt, wenn kein Platz dafür vorhanden ist, deren Funktion wird dann von einer lichtabsorbierenden Ausbildung des Wandung der Lichtkanäle übernommen. Ebenfalls sei erwähnt, dass die Lichtkanäle in Fig. 13 mit den gleichen Proportionen wie in Fig. 6 dargestellt worden sind, es wäre aber möglich und sogar vorteilhaft, die Abstände zwischen den Lichtkanälen (d.h. die Breite der sie trennenden Wandungen) gleich der Breite der Lichtkanäle selbst zu wählen, so dass die Bereiche des Prüfguts, die von den Lichtkanälen der ersten und der zweiten Reihe erfasst werden, untereinander nicht überlappen, sondern sich gerade aneinander anfügen, womit die kleinstmögliche und daher wirtschaftlichste Anzahl von Prüfkanälen zur Erfassung eines vorgegebenen Bereichs des Prüfguts erreicht wird.

Wenn zwei Reihen von Prüfkanälen bzw. Lichtkanälen vorgesehen sind, die einander gleich sind, d.h. die gleiche Anzahl von Prüfkanälen aufweisen, und im wesentlichen parallel zueinander sowie sehr nahe beieinander angeordnet sind, so kann die eine Reihe dem lichtquellenseitigen Teil und die andere Reihe dem wandlerseitigen Teil der erfindungsgemässen Vorrichtung zugeordnet sein, so dass beide Teile 10 und 29 der erfindungsgemässen Vorrichtung auf derselben Seite des Prüfguts 1 zu liegen kommen. Die Länge des lichtquellenseitigen Teils oder des wandlerseitigen Teils des Lichtkanals kann dabei im wesentlichen auf Null reduziert werden, und/oder die Wandung zwischen dem lichtquellenseitigen Teil und dem wandlerseitigen Teil des Lichtkanals kann teilweise ausfallen, sofern der übrigbleibende Teil des Lichtkanals das Lichtbündel des von der Lichtquelle zum Prüfgut gelangenden Lichts genügend begrenzt.

Die Dimensionen der Prüfkanäle brauchen keineswegs die gleichen zu sein. Für diverse Anwendungen kann es zweckmässig sein, beispielsweise vom einen Ende der Reihe zum anderen die Lichtkanäle zu vergrössern, oder es kann zweckmässig sein, den lichtquellenseitigen Teil des Lichtkanals mit anderer Querschnittsform und/oder Querschnittsfläche auszubilden als den wandlerseitigen Teil des Lichtkanals. Insbesondere brauchen die Lichtkanäle nicht unbedingt die beschriebene viereckige Querschnittsform aufzuweisen, die Querschnittsform kann beispielsweise kreisförmig und der entsprechende Hohlraum kann zylindrisch, aber auch beispielsweise kegelförmig, pyramidenförmig usw. sein.

Die Reihen von Prüfkanälen brauchen auch nicht geradlinig zu sein, eine Anordnung entlang einer Kurve, beispielsweise eines Kreisbodens, kann für diverse Anwendungen zweckmässig sein.

## Patentansprüche

1. Vorrichtung zur gleichzeitigen berührungslosen Prüfung einer Oberfläche oder internen Grenzfläche eines Prüfguts (1) mittels Auflichts oder einer Schicht oder eines räumlichen Abschnitts des Prüfguts (1) mittels zurückgestreuten oder zurückgespiegelten Durchlichts, wobei
- die Vorrichtung mindestens eine Lichtquelle (3) und eine Mehrzahl von Prüfkanälen umfasst,
- jeder Prüfkanal einen optoelektronischen Wandler (4a) und mindestens einen im Lichtweg zwischen der Lichtquelle und dem Wandler angeordneten Lichtkanal (5a) umfasst, in dem ein Strahlenteilerelement angeordnet ist,
- jeder Lichtkanal (5a) als zur Begrenzung eines Lichtbündels bestimmtes optisches Element ausgebildet ist,
- die Lichtkanäle (5a) als ein Gehäuse (6a) durchdringende Ausnehmungen ausgebildet sind, und
- das Prüfgut (1) im Lichtweg zwischen der Lichtquelle (3) und dem Wandler (4a) angeordnet ist,
dadurch gekennzeichnet, dass
- die Lichtkanäle auf zumindest einem Teil des darinliegenden Lichtwegs nebeneinander in dem gemeinsamen Gehäuse (6a) angeordnet sind,
- die Prüfkanäle in mindestens einer Reihe angeordnet sind,
- in jeder Reihe von Prüfkanälen die Lichtkanäle (5a) eine der beteffenden Reihe zugeordnete gemeinsame Symmetrieebene (7a) aufweisen,
- das Gehäuse (6a) mindestens zweiteilig mit in der jeweiligen Symmetrieebene voneinander trennbaren Teilen (8a,9a) ausgebildet ist,
- die Strahlenteilerelemente alle Prüfkanäle als Teile eines eine einzelne Baugruppe bildenden, im Gehäuse entfernbar angeordneten Strahlenteilers (12) ausgebildet sind, und
- die Wandler (4a) am gleichen Gehäuse (6a) wie der Strahlenteiler (12) nebeneinander und je einem Lichtkanal (5a) entsprechend angeordnet sind.

2. Vorrichtung nach Anspruch 1, dadurch gekennzeichnet, dass die prüfgutseitigen Enden der Lichtkanäle (5a) mit einer Fläche kongruent sind, die parallel zu einer Oberfläche (11) des Prüfguts ausgebildet und angeordnet ist.

3. Vorrichtung nach Anspruch 1, dadurch gekennzeichnet, dass die Lichtquellen (3) aus je einem Lichtkanal (5a) entsprechenden Leuchtdioden oder Laserdioden gebildet sind.

4. Vorrichtung nach Anspruch 1, dadurch gekennzeichnet, dass die Lichtquellen (3) abseits des Gehäuses (6a) angeordnet und mit den Lichtkanälen (5a) über Lichtleiter (36) verbunden sind.

5. Vorrichtung nach Anspruch 1, dadurch gekennzeichnet, dass die Wandler (4a) aus je einem Lichtkanal (5a) entsprechenden Fotodioden gebildet sind, die abseits des Gehäuses (6a) angeordnet und mit den Lichtkanälen (5a) über Lichtleiter verbunden sind.

6. Vorrichtung nach einem der Ansprüche 4 und 5, dadurch gekennzeichnet, dass jeder Lichtleiter (36) zumindest teilweise in zumindest einem Teil eines Lichtkanals (5a) angeordnet ist.

7. Vorrichtung nach Anspruch 1, dadurch gekennzeichnet, dass die beiden Teile (8a,9a) des Gehäuses (6a) mit einander entsprechenden Ausnehmungen (13,14:39,40) versehen sind, die bei Zusammenfügung der Teile (8a,8b;9a,9b) zusammen eine Ausnehmung zur Aufnahme der einzelnen Baugruppe des Strahlenteilers (12) bilden.

8. Vorrichtung nach Anspruch 1, dadurch gekennzeichnet, dass in den Lichtkanälen (5a) Polarisations- und/oder Farbfilterelemente (38) angeordnet sind, die als Teile eines eine einzelne Baugruppe bildenden, im Gehäuse (6a) entfernbar angeordneten Polarisations- und/oder Farbfilters (38) ausgebildet sind.

9. Vorrichtung nach Anspruch 8, dadurch gekennzeichnet, dass die beiden Teile (8a,9a) des Gehäuses (6a) mit einander entsprechenden Ausnehmungen (13,14;39,40) versehen sind, die bei Zusammenfügung der Teile (8a,8b;9a,9b) zusammen eine Ausnehmung zur Aufnahme der einzelnen Baugruppe des Filters (38) bilden.

10. Vorrichtung nach Anspruch 1, dadurch gekennzeichnet, dass die Strahlenteilerelemente (12) als Streifenspiegelelemente ausgebildet sind.

11. Vorrichtung nach Anspruch 10, dadurch gekennzeichnet, dass in jedem Lichtkanal (5a) ein zweites Streifenspiegelelement (38) angeordnet ist, dessen Streifen halbdurchlässig sind und im wesentlichen den Streifen des als Streifenspiegelelement ausgebildeten Strahlenteilerelements (12) entsprechen, wobei die zweiten Streifenspiegelelemente (38) als Teile eines eine einzelne Baugruppe bildenden, im Gehäuse (6a) entfernbar angeordneten halbdurchlässigen Streifenspiegels ausgebildet sind.

12. Vorrichtung nach Anspruch 1, gekennzeichnet durch ein in jedem Lichtkanal (5a) angeordnetes zweites Strahlenteilerelement (38), wobei die zweiten Strahlenteilerelemente (38) aller Prüfkanäle als Teile eines eine einzelne Baugruppe bildenden, im Gehäuse (6a) entfernbar angeordneten zweiten Strahlenteilers (38) ausgebildet sind, und durch je einen zweiten Wandler (4c), der gegenüber dem zweiten Strahlenteilerelement (38) wie der erste Wandler (4a) gegenüber dem ersten Strahlenteilerelement (12) angeordnet ist.

13. Verwendung der Vorrichtung nach Anspruch 1 zur Prüfung einer vermeintlich glatten oder regelmässig strukturierten Oberfläche oder internen Grenzfläche des Prüfguts auf deren Unregelmässigkeiten.

14. Verwendung der Vorrichtung nach Anspruch 1 zur Prüfung einer lichtdurchlässigen, vermeintlich homogenen oder regelmässig strukturierten Schicht oder eines lichtdurchlässigen, vermeintlich homogenen oder regelmässig strukturierten räumlichen Abschnitts des Prüfguts auf darin vorliegende Unregelmässigkeiten wie Inhomogenitäten und Einschlüsse.

15. Verwendung der Vorrichtung nach Anspruch 1 zur Prüfung einer vermeintlich stillstehenden Oberfläche oder internen Grenzfläche des Prüfguts auf Lageänderungen dieser Fläche, die beispielsweise durch Bewegung, Schwingung, Dehnung, Schrumpfung, Wachstum, Niederschlag und ähnliche Ursachen hervorgerufen sind.

16. Verwendung der Vorrichtung nach Anspruch 1 zur Prüfung des Rundlaufs einer Welle auf Rundlauffehler, insbesondere Schwingungen, gegebenenfalls in Abhängigkeit der Drehgeschwindigkeit der Welle.

17. Verwendung der Vorrichtung nach Anspruch 1 zur Prüfung einer lichtdurchlässigen, vermeintlich stillstehenden Schicht oder eines lichtdurchlässigen, vermeintlich stillstehenden räumlichen Abschnitts des Prüfguts auf Bewegungen und insbesondere Schwingungen von im Prüfgut vorliegenden Inhomogenitäten oder Einschlüssen wie im Prüfgut schwebende oder suspendierte Teilchen.

18. Verwendung nach einem der Ansprüche 13 bis 17, dadurch gekennzeichnet, dass man auf der einen Seite des Prüfguts eine Vorrichtung zur Prüfung des Prüfguts mittels Auflichts oder zurückgestreuten Durchlichts verwendet und auf der anderen Seite des Prüfguts einen Rückstrahler für das durchgelassene Licht anordnet.

19. Verwendung nach einem der Ansprüche 13 bis 17, dadurch gekennzeichnet, dass man auf der einen Seite des Prüfguts eine Vorrichtung zur Prüfung des Prüfguts mittels Auflichts oder zurückgestreuten Durchlichts verwendet und auf der anderen Seite des Prüfguts einen Absorber für das durchgelassene Licht anordnet.

## Claims

1. Device for the simultaneous non-contact testing of a surface or internal boundary surface of a material under test (1) by means of reflected light or of a layer or of a three-dimensional portion of the material under test (1) by means of backscattered or back-reflected transmitted light, in which
- the device comprises at least one light source (3) and a plurality of test channels,
- each test channel comprises an optoelectronic transducer (4a) and at least one optical channel (5a) disposed in the light path between the light source and the transducer, in which optical channel a beam splitter element is disposed,
- each optical channel (5a) is designed as an optical element intended to delimit a light beam,
- the optical channels (5a) are designed as recesses penetrating a housing (6a), and
- the material under test (1) is disposed in the light path between the light source (3) and the transducer (4a),
characterized in that
- the optical channels are disposed on at least one part of the light path situated therein, alongside one another in the common housing (6a),
- the test channels are disposed in at least one row,
- in each row of test channels the optical channels (5a) exhibit a common plane of symmetry (7a) associated with the pertinent row,
- the housing (6a) is designed in at least two parts with parts (8a, 9a) which are separable from one another in the respective plane of symmetry,
- the beam splitter elements of all test channels are designed as parts of a beam splitter (12) which forms an individual assembly and which is removably disposed in the housing,
and
- the transducers (4a) are disposed at the same housing (6a) as the beam splitter (12), alongside one another and in correspondence with a respective optical channel (5a).

2. Device according to Claim 1, characterized in that the material-under-test ends of the optical channels (5a) are congruent with a surface which is designed and disposed to be parallel to a surface (11) of the material under test.

3. Device according to Claim 1, characterized in that the light sources (3) are formed from laser diodes or light emitting diodes corresponding to a respective optical channel (5a).

4. Device according to Claim 1, characterized in that the light sources (3) are disposed away from the housing (6a) and are connected to the optical channels (5a) via light guides (36).

5. Device according to Claim 1, characterized in that the transducers (4a) are formed from photodiodes which correspond to a respective optical channel (5a) and which are disposed away from the housing (6a) and are connected to the optical channels (5a) via light guides.

6. Device according to one of Claims 4 and 5, characterized in that each light guide (36) is disposed at least partially in at least one part of an optical channel (5a).

7. Device according to Claim 1, characterized in that the two parts (8a, 9a) of the housing (6a) are provided with mutually corresponding recesses (13, 14; 39, 40) which, upon the joining together of the parts (8a, 8b; 9a, 9b), together form a recess to receive the individual assembly of the beam splitter (12).

8. Device according to Claim 1, characterized in that in the optical channels (5a) there are disposed polarizing and/or colour filter elements (38) which are designed as parts of a polarizing and/or colour filter (38) which forms an individual assembly and which is removably disposed in the housing (6a).

9. Device according to Claim 8, characterized in that the two parts (8a, 9a) of the housing (6a) are provided with mutually corresponding recesses (13, 14; 39, 40) which, upon the joining together of the parts (8a, 8b; 9a, 9b), together form a recess to receive the individual assembly of the filter (38).

10. Device according to Claim 1, characterized in that the beam splitter elements (12) are designed as strip mirror elements.

11. Device according to Claim 10, characterized in that in each optical channel (5a) there is disposed a second strip mirror element (38), the strips of which are semitransmitting and substantially correspond to the strips of the beam splitter element (12) designed as strip mirror element, the second strip mirror elements (38) being designed as parts of a semitransmitting strip mirror which forms an individual assembly and which is removably disposed in the housing (6a).

12. Device according to Claim 1, characterized by a second beam splitter element (38) disposed in each optical channel (5a), the second beam splitter elements (38) of all test channels being designed as parts of a second beam splitter (38) which forms an individual assembly and which is removably disposed in the housing (6a), and by a respective second transducer (4c), which is disposed opposite the second beam splitter element (38) as the first transducer (4a) is disposed opposite the first beam splitter element (12).

13. Use of the device according to Claim 1 for the testing of a supposedly smooth or regularly structured surface or internal boundary surface of the material under test for its irregularities.

14. Use of the device according to Claim 1 for the testing of an optically transmitting, supposedly homogeneous or regularly structured layer or of an optically transmitting, supposedly homogeneous or regularly structured three-dimensional portion of the material under test for irregularities present therein, such as inhomogeneities and inclusions.

15. Use of the device according to Claim 1 for the testing of a supposedly stationary surface or internal boundary surface of the material under test for changes of position of this surface which are caused, for example, by movement, oscillation, expansions, shrinkage, growth, depositing and similar causes.

16. Use of the device according to Claim 1 for the testing of the concentricity of a shaft or concentricity errors, especially oscillations, where appropriate as a function of the speed of rotation of the shaft.

17. Use of the device according to Claim 1 for the testing of an optically transmitting, supposedly stationary layer or of an optically transmitting, supposedly stationary three-dimensional portion of the material under test for movements and especially oscillations of inhomogeneities or inclusions present in the material under test such as particles which are floating or suspended in the material under test.

18. Use according to one of Claims 13 to 17, characterized in that on one side of the material under test a device is used for the testing of the material under test by means of reflected light or backscattered transmitted light and on the other side of the material under test a reflector for the transmitted light is disposed.

19. Use according to one of Claims 13 to 17, characterized in that on one side of the material under test a device is used for the testing of the material under test by means of reflected light or backscattered transmitted light and on the other side of the material under test an absorber for the transmitted light is disposed.

## Revendications

1. Dispositif pour la vérification simultanée sans contact d'une surface ou d'une surface de séparation interne d'un matériau d'essai (1) au moyen d'une lumière incidente ou encore d'une couche ou d'une section spatiale du matériau d'essai (1) au moyen d'une lumière transmise rétrodiffusée ou réfléchie, dans lequel
- le dispositif comprend au moins une source lumineuse (3) et une multitude de canaux d'essai,
- chaque canal d'essai comprend un transducteur optoélectronique (4a) et au moins un canal optique (5a) disposé dans le trajet optique entre la source lumineuse et le transducteur, dans lequel est disposé un élément de fractionnement des rayons,
- chaque canal optique (5a) est réalisé en forme d'élément optique déterminé pour délimiter un faisceau lumineux,
- les canaux optiques (5a) sont réalisés en forme d'évidements traversant un logement (6a), et
- le matériau d'essai (1) est disposé dans le trajet optique entre la source lumineuse (3) et le transducteur (4a),
**caractérisé en ce que**
- les canaux optiques sont disposés, sur au moins une partie du trajet optique qui y est contenu, les uns à côté des autres dans le logement commun (6a),
- les canaux optiques sont disposés en au moins une rangée,
- dans chaque rangée de canaux d'essai, les canaux optiques (5a) présentent un plan de symétrie commun (7a) attribué à la série correspondante,
- le logement (6a) est réalisé au moins en deux parties avec des parties (8a, 9a) séparables l'une de l'autre dans le plan de symétrie respectif,
- les éléments de fractionnement des rayons de tous les canaux d'essai sont réalisés en forme de parties d'un dispositif (12) de fractionnement des rayons disposé de manière amovible dans le logement et formant un groupe de montage individuel, et
- les transducteurs (4a) dans le même logement (6a) sont disposés, comme le dispositif (12) de fractionnement des rayons, les uns à côté des autres et chacun de manière correspondante à un canal optique (5a).

2. Dispositif selon la revendication 1, caractérisé en ce que les extrémités des canaux optiques (5a) tournées du côté du matériau d'essai sont congruentes avec une face qui est réalisée et disposée parallèlement à une surface (11) du matériau d'essai.

3. Dispositif selon la revendication 1, caractérisé en ce que les sources lumineuses (3) sont réalisées à partir de photodiodes ou de diodes à laser correspondant respectivement à un canal optique (5a).

4. Dispositif selon la revendication 1, caractérisé en ce que les sources lumineuses (3) sont disposées à l'écart du logement (6a) et sont reliées aux canaux optiques (5a) à l'intervention de fibres optiques (36).

5. Dispositif selon la revendication 1, caractérisé en ce que les transducteurs (4a) sont formés à partir de photodiodes correspondant respectivement à un canal optique (5a), qui sont disposées à l'écart du logement (6a) et qui sont reliées aux canaux optiques (5a) à l'intervention de fibres optiques.

6. Dispositif selon l'une quelconque des revendications 4 et 5, caractérisé en ce que chaque fibre optique (36) est disposée au moins partiellement dans au moins une partie d'un canal optique (5a).

7. Dispositif selon la revendication 1, caractérisé en ce que les deux parties (8a, 9a) du logement (6a) sont munies d'évidements (13, 14; 39, 40) mutuellement correspondants qui, lorsqu'on rejoint les parties (8a, 8b; 9a, 9b), forment ensemble un évidement dans lequel vient se loger le groupe de montage individuel du dispositif (12) de fractionnement des rayons.

8. Dispositif selon la revendication 1, caractérisé en ce que, dans les canaux optiques (5a), sont disposés des éléments (38) de filtre de polarisation et/ou de filtre chromatiques, qui sont réalisés en forme de parties d'un filtre (38) de polarisation et/ou chromatique disposé de manière amovible dans le logement (6a) et formant un groupe de montage individuel.

9. Dispositif selon la revendication 8, caractérisé en ce que les deux parties (8a, 9a) du logement (6a) sont munies d'évidements (13, 14; 39, 40) mutuellement correspondants, qui, lorsqu'on réunit les parties (8a, 8b; 9a, 9b), forment ensemble un évidement dans lequel vient se loger le groupe de montage individuel du filtre (38).

10. Dispositif selon la revendication 1, caractérisé en ce que les éléments (12) de fractionnement des rayons sont réalisés en forme d'éléments de miroir à bandes.

11. Dispositif selon la revendication 10, caractérisé en ce que, dans chaque canal optique (5a), est disposé un deuxième élément (38) de miroir à bandes dont les bandes sont semi-transparentes et correspondent essentiellement aux bandes de l'élément (12) de fractionnement des rayons réalisées en forme d'élément de miroir à bandes, dans lequel les deuxièmes éléments (38) de miroir à bandes sont réalisés sous forme de parties d'un miroir à bandes semi-transparent disposé de manière amovible dans le logement (6a) et formant un groupe de montage individuel.

12. Dispositif selon la revendication 1, caractérisé par un deuxième élément (38) de fractionnement des rayons disposé dans chaque canal optique (5a), dans lequel les deuxièmes éléments (38) de fractionnement des rayons de tous les canaux d'essai sont réalisés en forme de parties d'un deuxième dispositif (38) de fractionnement des rayons disposé de manière amovible dans le logement (6a) et formant un groupe de montage individuel, et par respectivement un deuxième transducteur (4c) qui est disposé vis-à-vis du deuxième élément (38) de fractionnement des rayons comme le premier transducteur (4a) vis-à-vis du premier élément (12) de fractionnement des rayons.

13. Utilisation du dispositif selon la revendication 1, pour soumettre à l'essai une surface prétendument lisse ou de structure régulière ou encore une surface de séparation interne du matériau d'essai quant à ses irrégularités.

14. Utilisation du dispositif selon la revendication 1, pour la vérification d'une couche translucide prétendument homogène ou de structure régulière ou encore d'une section spatiale du matériau d'essai, translucide, prétendument homogène ou de structure régulière quant à des irrégularités qui y sont présentes, telles que des inhomogénéités et des inclusions.

15. Utilisation du dispositif selon la revendication 1, pour la mise à l'essai d'une surface ou d'une surface de séparation interne du matériau d'essai prétendument stationnaire quant aux modifications de position de cette surface qui sont provoquées par exemple par le mouvement, par la vibration, par l'extension, par la contraction, par le grossissement, par la condensation et par d'autres causes analogues.

16. Utilisation du dispositif selon la revendication 1, pour la mise à l'essai de la concentricité d'un arbre quant aux défauts de concentricité, en particulier des oscillations, éventuellement en fonction de la vitesse de rotation de l'arbre.

17. Utilisation du dispositif selon la revendication 1, pour la mise à l'essai d'une couche translucide prétendument stationnaire ou encore d'une section spatiale translucide prétendument stationnaire du matériau d'essai quant aux mouvements et en particulier aux oscillations de inhomogénéités ou d'inclusions présentes dans le matériau d'essai, telles que des particules flottantes ou en suspension dans le matériau d'essai.

18. Utilisation selon l'une quelconque des revendications 13 à 17, caractérisée en ce qu'on utilise, d'un côté du matériau d'essai, un dispositif pour la mise à l'essai du matériau au moyen d'une lumière incidente ou d'une lumière transmise redistribuée et on dispose, de l'autre côté du matériau d'essai, un réflecteur pour la lumière transmise.

19. Utilisation selon l'une quelconque des revendications 13 à 17, caractérisée en ce que, d'un côté du matériau d'essai, on utilise un dispositif pour la mise à l'essai du matériau au moyen d'une lumière incidente ou d'une lumière transmise redistribuée et, de l'autre côté du matériau d'essai, on dispose un absorbeur pour la lumière transmise.
